(19)

**Europäisches Patentamt**
**European Patent Office**
**Office européen des brevets**

(11)  **EP 1 747 484 B1**

(12)  # EUROPÄISCHE PATENTSCHRIFT

(45) Veröffentlichungstag und Bekanntmachung des Hinweises auf die Patenterteilung:
**25.01.2012 Patentblatt 2012/04**

(51) Int Cl.:
***G01V 8/24*** *(2006.01)*

(21) Anmeldenummer: **05748418.0**

(22) Anmeldetag: **14.05.2005**

(86) Internationale Anmeldenummer:
**PCT/EP2005/005294**

(87) Internationale Veröffentlichungsnummer:
**WO 2005/114263 (01.12.2005 Gazette 2005/48)**

(54) **VORRICHTUNG UND VERFAHREN ZUM ERKENNEN EINES OBJEKTS IN ODER AN EINER VERSCHLIESSBAREN ÖFFNUNG**

DEVICE AND METHOD FOR IDENTIFYING AN OBJECT IN OR ON A CLOSABLE OPENING

DISPOSITIF ET PROCEDE POUR RECONNAITRE UN OBJET DANS OU SUR UNE OUVERTURE REFERMABLE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.05.2004 DE 102004025345**

(43) Veröffentlichungstag der Anmeldung:
**31.01.2007 Patentblatt 2007/05**

(73) Patentinhaber: **Mechaless Systems GmbH 76131 Karlsruhe (DE)**

(72) Erfinder:
• **MELCHER, Rolf 76133 Karlsruhe (DE)**
• **ROTTMANN, Frank 44267 Dortmund (DE)**

• **REIME, Gerd 77815 Bühl (DE)**
• **RODEWALD, Andreas 71083 Herrenberg (DE)**
• **SETZER, Jürgen 75428 Illingen (DE)**
• **DIETZ, Michael 71139 Ehningen (DE)**
• **LANGER, Peter 76227 Karlsruhe (DE)**

(74) Vertreter: **Durm & Partner Moltkestrasse 45 76133 Karlsruhe (DE)**

(56) Entgegenhaltungen:
**EP-B- 0 706 648      DE-A1- 10 120 940
DE-C1- 3 620 227     US-B1- 6 495 832**

**Beschreibung**

Die Erfindung betrifft eine Vorrichtung und ein Verfahren zum Erkennen eines Objekts in oder an einer verschließbaren Öffnung nach dem Oberbegriff der Ansprüche 1 und 15.

Sobald sich ein bewegliches Teil in einer Führung auf ein anderes Teil zu bewegt, besteht grundsätzlich die Gefahr, dass ein dazwischen befindliches Objekt eingeklemmt wird. Beispiele hierfür finden sich nicht nur, aber auch im Fahrzeugbereich, wenn z. B. ein Fensterheber oder ein Schiebedach sich schließt, insbesondere wenn diese Schließung selbsttätig mittels eines motorischen Antriebs erfolgt, oder wenn eine Fahrzeugöffnung wie eine Tür oder einen Kofferraumdeckel geschlossen wird.

Derartige Probleme wurden bisher meist dadurch gelöst, dass man den betreffenden Raumbereich nach dem Lichtschrankenprinzip überwacht. Befindet sich ein Objekt zwischen dem optischen Sender wie z. B. einer LED und dem optischen Empfänger wie z. B. einer Fotodiode wird Licht absorbiert und die Gesamtmenge des Lichts am Empfänger reduziert sich. Die Auswerteelektronik erkennt anhand dieser Veränderung in der empfangenen Lichtmenge, dass ein Objekt vorhanden ist und leitet diese Information an die übergeordnete Verarbeitungseinheit weiter. Möchte man den Durchtritt von Objekten durch eine Fläche im Raum überwachen, kann man mehrere solcher Lichtschranken nebeneinander anordnen.

Alternativ kann mittels einer geeigneten Sende- und Empfangsoptik die Lichtausbreitung auf die zu überwachende Fläche konzentriert werden, wie dies z. B. aus der WO 03/009476 A1 bekannt ist. Dadurch ist es möglich, mit nur einer Lichtquelle und nur einem Empfänger den zu überwachenden Bereich flächenförmig auszuleuchten. Bedarfsweise kann man den Empfindlichkeitsbereich in Richtung senkrecht zu dieser Fläche schmal halten, so dass Fehlauslösungen durch Objekte außerhalb der Durchtrittsfläche minimiert werden.

Gemäß den Einklemmschutzvorschriften, wie sie insbesondere für Schiebedächer vorhanden sind, werden von Seiten der Gesetzgebung für automatische Schließfunktionen wie z. B. das Komfortschließen oder die Fernschließung Forderungen zum Schutze der Insassen gestellt, die mit herkömmlichen Einklemmschutzlösungen z. B. in Form eines indirekten Einklemmschutzes nicht zufriedenstellend/gesetzes-konform abgedeckt werden können. Diese Situation verschärft sich bei den "außenlaufenden Schiebehebedächern", die auch Panoramadächer genannt werden. Aufgrund des konstruktiven Aufbaus stellen diese Dächer ein weitaus größeres Gefahrenpotential bezüglich der Einklemmrisiken dar, die derzeit nicht vollständig mit herkömmlichen Maßnahmen gesetzeskonform abgedeckt werden können. Die konstruktionsbedingten Gleichlaufschwankungen der außenlaufenden Schiebehebedächer sowie die mögliche große Streubreite der mechanischen Toleranzen führen herkömmliche Einklemmschutzsysteme an die Grenze der Detektionsmöglichkeit.

Lichtleiter wurden im Bereich von Schiebedächern zum Einklemmschutz bereits eingesetzt. Insofern schlägt die dem Oberbegriff des Anspruches 1 zugrunde liegende DE 102 05 810 A1 die Verwendung eines Lichtleiters vor, der unter Einwirkung eines äußeren Drucks verformt wird, so dass die Intensität und/oder die Frequenz und/oder die Laufzeit eines in den Lichtleiter eingespeisten Lichts beeinflusst wird. Aufgrund dieser Veränderung wird auf ein Einklemmen geschlossen und der Antrieb des Schiebedachs entsprechend betätigt. Der Lichtleiter ist entlang des Rahmens der Öffnung angeordnet und kann an einem Ende verspiegelt sein.

Aus der EP 0 706 648 B1 ist eine Anordnung von wenigstens zwei Leuchtdioden bekannt, die wechselseitig auf einen Photoempfänger einwirken. Das in der Amplitude wenigstens einer Lichtstrecke geregelte Licht wirkt zusammen mit dem Licht einer weiteren Lichtquelle so auf den Photoempfänger ein, das ein Empfangssignal ohne taktsynchrone Signalanteile entsteht. Das Empfangssignal des Photoempfängers wird einem Synchrondemodulator zugeführt, der das Empfangssignal wiederum in die beiden Signalkomponenten entsprechend den Lichtquellen zerlegt. Beide Signalkomponenten werden nach Tiefpassfilterung in einem Vergleicher miteinander verglichen. Treten Signalunterschiede auf, werden diese mittels Leistungsregelung wenigstens einer der Lichtquellen zu Null ausgeregelt, um dadurch insbesondere eine Fremdlichtkompensation zu erreichen.

Im Fahrzeugbereich kommt jedoch erschwerend hinzu, dass die Empfänger unter Umständen soweit voneinander entfernt sind, dass sie deutlichen Temperaturunterschieden unterworfen sind, die selbst mit Referenzwerten nur schwer zu beherrschen sind.

Ausgehend von diesem Stand der Technik liegt der vorliegenden Erfindung die Aufgabe zugrunde, eine Vorrichtung und ein Verfahren zum Erkennen eines Objekts in einer verschließbaren Öffnung zu schaffen, das zuverlässig berührungslos arbeitet.

Diese Aufgabe wird durch eine Vorrichtung mit den Merkmalen des Anspruches 1 sowie durch ein Verfahren mit den Merkmalen des Anspruches 15 gelöst.

Am Rand der Öffnung sind Lichtleiter angeordnet, in die Licht eingespeist wird, das quer zur Längserstreckung des Lichtleiters aus dem einen Lichtleiter ausgestrahlt und vom anderen Lichtleiter eingefangen wird. Dadurch wird ein Lichtfeld gebildet, das die Öffnung überbrückt. Beide Lichtleiter werden wechselweise als aussendende Lichtleiter und empfangende Lichtleiter verwendet, so dass sich ein bidirektionales Lichtfeld ergibt. Ein Objekt, das in diesem bidirektionalen Lichtfeld vorhanden ist, wird durch eine Vergleichsmessung zwischen den an den jeweiligen Empfängern erhaltenen Signalen erkannt. Durch den Aufbau des Lichtfelds wird eine günstige Lösung geschaffen, da grundsätzlich nur wenige Empfangs- und Sendeelemente in Verbindung mit den Lichtleitern eingesetzt werden müssen. Die Vergleichsmessungen erlauben, auf Referenzwerte grundsätzlich zu verzichten. Dennoch können durch entsprechende Auswertung der ermittelten Werte sowohl dynamische Änderungen als auch ein sich statisch im Lichtfeld befindliches Objekt erfasst werden. Gerade Letzteres ist bei den bisherigen Systemen oft ein Risiko, da z. B. bei einem Fenster oder Schiebedach erkannt werden muss, ob sich eine Hand schon länger im geöffneten Ausschnitt befindet.

Zur wirksamen Absicherung der Insassen gegenüber potentiellen Einklemmrisiken und zur Absicherung gegenüber eventuellen Produkthaftungsansprüchen wird ein optisches Lichtfeld z. B. bei einem Schiebedach im Dachhimmelausschnitt erzeugt, das eine Durchdringung zuverlässig detektiert und den automatischen Zulauf gemäß der gesetzlichen Vorschrift abbricht, so dass eine Einklemmsituation vermieden wird.

Die optischen Layer, in der Regel Lichtleiter können durch den Dachhimmel kaschiert werden und sind somit für den Kunden nicht sichtbar, sofern dies nicht erwünscht ist. Der Einklemmschutz kann auch auf die Rollosteuerung ausgeweitet werden. Zur Erhöhung der Systemzuverlässigkeit und zur Unterdrückung von Fehlauslösungen kommt damit ein bidirektionales Lichtfeld vorzugsweise im Multiplexverfahren zum Einsatz, mit dem eventuelle Fehlinterpretationen durch z. B. Reflektionen in Folge des Schiebedachdeckels oder allgemein des beweglichen Teils eliminiert werden können. Gleichzeitig kann die Fremdlichteinwirkung durch diese Anordnung besser differenziert werden.

Die Lichtleiter können kostengünstig in der Flächenabdeckung des gesamten Öffnungsbereichs angeordnet werden, wobei der Lichtleiter vorzugsweise mechanisch so verändert ist, das an vielen vordefinierten Stellen Licht gezielt und in einem definierten Winkel austritt und sich die gewünschte Lichtverteilung des Lichtfeldes über die Öffnung hinweg ergibt. Die Lichtleiter werden wechselseitig als Sender und Empfänger verwendet. Die mechanische Veränderung des Lichtleiters bewirkt eine Aufhebung der Totalreflektion und damit die Auskopplung von Licht. Jede Auskoppelstelle wirkt wie eine Lichtquelle mit bekanntem Abstrahlwinkel. Die Anzahl der Auskoppelstellen, ihre Position und die numerische Appertur lassen sich gezielt variieren und bestimmen die Lichtverteilung des Lichtfeldes.

Vorzugsweise werden die an den verschiedenen Empfängern anstehenden Signale multipliziert und/oder dividiert und/oder es wird ihre Differenz gebildet, um dynamische und statische Messungen durchzuführen. Der Wirkungsgrad der Schutzvorrichtung kann dadurch gesteigert werden, dass die Lichtleiter eine Struktur aufweisen, die das Licht quer zu ihrer Längserstreckung aus dem Lichtleiter auskoppeln. Diese Struktur kann vorzugsweise in der Nähe des Schließbereichs vermehrt oder verstärkt vorhanden sein, so dass dort eine erhöhte Detektionsempfindlichkeit besteht.

Das Licht der Lichtleiter kann im sichtbaren Bereich ausgesandt werden, um dadurch eine Ambientenbeleuchtung zu erzielen. Es würde sich z. B. bei einem Schiebedach ein Leuchtkranz im Himmelausschnitt für das Schiebedach ergeben. Über die Empfänger können insbesondere bei einer Fremdlichtkompensation die kompensierten Lichtinformationen ausgewertet werden. Dadurch kann z. B. der Sonnenstand erkannt werden und die damit ermittelten Werte können für eine Klimasteuerung oder für die Steuerung eines Rollos zur Verminderung des Aufheizens genutzt werden. Sämtliche Arten der Lichterkennung sind damit möglich, so dass z. B. die Innenbeleuchtung bei Tageslicht abgeschaltet werden kann, was insbesondere im Standbetrieb eines Fahrzeugs zu einer Reduzierung des Strombedarfs führt.

Im gleichen Zusammenhang kann die Lichtinformation auch zur Überwachung verwendet werden, indem einfallendes Licht als Nutzinformation für die Innenraumüberwachung oder die Überwachung der Seitenscheiben verwendet wird.

Der Einklemmschutz ist so empfindlich, dass eine gesetzeskonforme automatische Steuerung auch möglich ist, ohne dass ein Sichtkontakt zum Fahrzeug bestehen muss. So kann das Fahrzeug bei Sonneneinstrahlung eine automatische Schließung des Rollos einleiten und selbst bei großen Reichweiten ist ein Femschließen möglich. Selbst kleine Signale wie die Signale von Regentropfen können als Nutzinformation genutzt werden, so dass ein Regenschließen möglich wird. In diesem Fall detektiert das Lichtfeld Regen und veranlasst ein automatisches Schließen z. B. eines Schiebedachs oder Fensters.

Vorteilhafte Ausgestaltungen der Erfindung sind in den entsprechenden Unteransprüchen und der folgenden Beschreibung angegeben.

Ausführungsbeispiele der Erfindung werden anhand der beigefügten Zeichnungen näher erläutert. Es zeigen:

Fig. 1          den prinzipiellen Aufbau eines Lichtfelds,

Fig. 2          ein Lichtfeld in Seitenansicht,

Fig. 3          schematische Darstellung bidirektionaler Messungen mit einer Darstellung des Lichlflusses von exponentieller Charakteristik der Lichtintensität,

Fig. 4          den Signalverlauf bei zufahrendem Schiebedach mit einem absorbierenden Objekt im Lichtfeld überlagert,

Fig. 5          Objekterkennung durch Auswertung der Signaldifferenz,

Fig. 6          eine zugehörige Schaltung,

Fig. 7 bis 10   verschiedene alternative, schematisch dargestellte Anordnungen von Lichtquelle, Empfänger und Kompensationselement,

Fig. 11         eine alternative, schematisch dargestellte Anordnung für Mehrfachmessungen,

Fig. 12         eine Sende-/Empfangscharakteristik der Lichtstärke im Bereich der Schließkante,

Fig. 13         den statischen und dynamischen Signalverlauf an der Schließkante bei Vorhandensein eines Objekts über die Zeit.

Die Figuren zeigen eine Vorrichtung zum Erkennen eines Objekts in oder an einer verschließbaren Öffnung 11, insbesondere der Öffnung eines Fahrzeugs. Grundsätzlich ist bei einer verschließbaren Öffnung zu erkennen, ob sich ein Objekt O innerhalb der Öffnung befindet, so dass eine Schließbewegung ggf. abgebrochen werden kann. Bei diesem Erkennen sind einerseits kurzfristige Veränderungen zu erkennen, andererseits müssen aber auch längerfristig sich in der Öffnung befindliche Objekte O erkannt werden. Derartige Öffnungen können Türen, Fenster oder an einem Fahrzeug Fenster, Schiebedach oder Kofferraum sein. Während bei insbesondere motorisch angetriebenen beweglichen Teilen am Fahrzeug, wie dem Schiebedach oder einem Fensterheber meist Einklemm- und/oder Scherbewegungen von Körperteilen der Insassen zu verhindern sind, kann es bei einem Kofferraumdeckel auch nur darum gehen, sicher zu stellen, dass sich keine Objekte in dem zu überwachenden Bereich befinden. Wird z. B. bei einem Fahrzeugverdeck der Kofferraum automatisch geschlossen, soll keine Flasche oder ein anderes Gepäckstück in den Verschlussbereich hineinragen. Grundsätzlich kann die Vorrichtung und das Verfahren jedoch auch außerhalb des Fahrzeugbereichs eingesetzt werden.

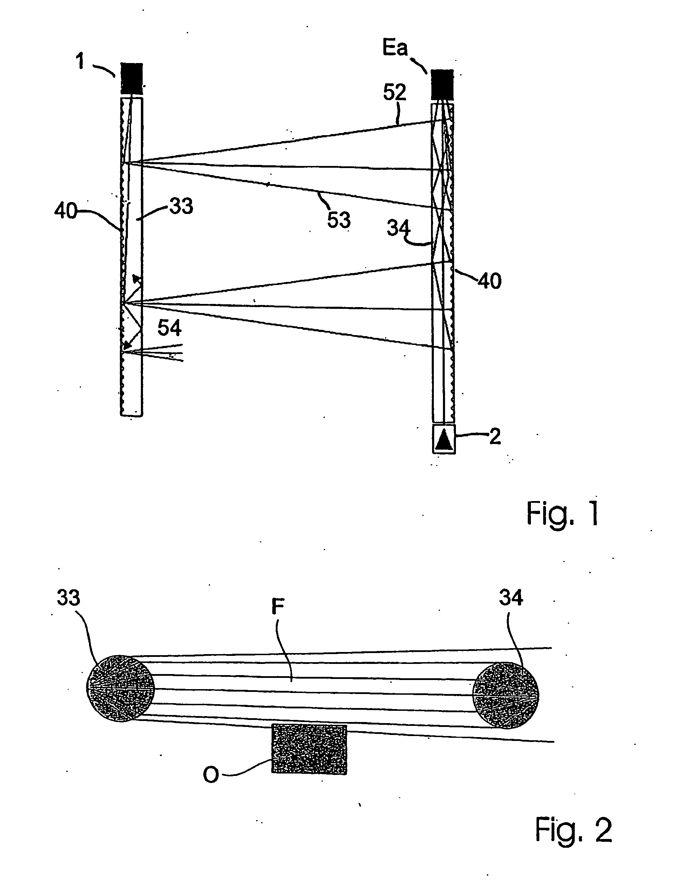

Figur 1 zeigt den grundsätzlichen Aufbau zur Erzeugung eines Lichtfelds. Mittels einer Lichtquelle 1 wird Licht in einen ersten Lichtleiter 33 eingespeist, das dort an einer Struktur 40 in einen Winkel umgelenkt wird, der ein Aussenden des Lichts quer zum Lichtleiter erlaubt. Es hat sich herausgestellt, dass ein optimaler schmaler Bereich bei einer leicht winkligen Anordnung gemäß den Linien 52 und 53 erreicht wird. Dazu besitzen der in Figur 1 aussendende erste Lichtleiter 33 ebenso wie der empfangende zweite Lichtleiter 34 eine derartige Struktur 40. Licht kann entweder unmittelbar auf diese Struktur auftreffen und abgestrahlt werden oder gemäß Lichtpfad 54 an der ersten Struktur noch in einem solchen Winkel abgelenkt werden, dass es innerhalb der Totalreflektion im Lichtleiter weitergeleitet wird, dann jedoch an einer weiteren Stelle der Struktur ausgekoppelt wird. Dies ist grundsätzlich aus der älteren deutschen Patentanmeldung DE 10 2004 011 780.2 bekannt.

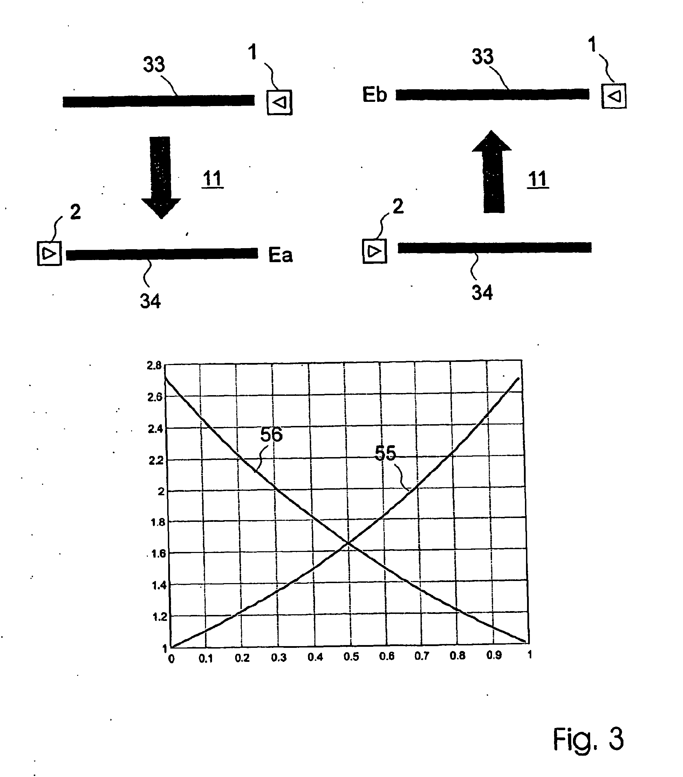

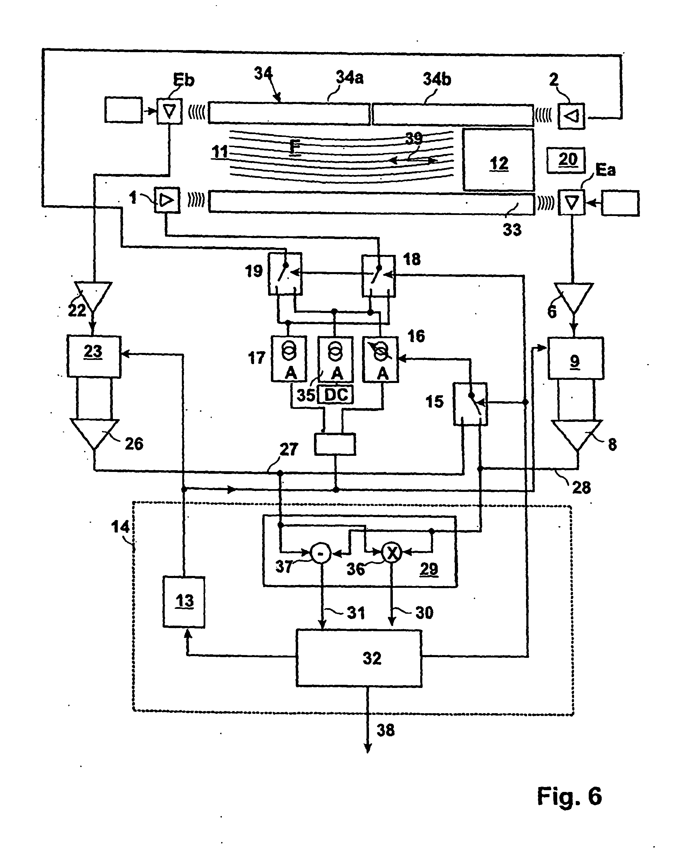

Das vom empfangenden zweiten Lichtleiter empfangene Licht wird dem Empfänger Ea zugeleitet. Kommt gemäß Fig. 2 ein Objekt O in das so geschaffene Lichtfeld F, führt dies zu einer Abschattung, was am Empfänger Ea, Eb wahr genommen wird. Gemäß Fig. 3 und 6 ist vorzugsweise jedem Lichtleiter jeweils wenigstens eine Lichtquelle 1, 2, 3, 4 und wenigstens ein Empfänger Ea, Eb zugeordnet. Es muss allerdings nicht jedem Lichtleiter ein Empfänger und eine Lichtquelle zugeordnet sein, es genügt auch nur einen Teil der Lichtleiter entsprechend mit Empfänger und Lichtquelle zu versehen. Es ist nur erforderlich das entsprechende Sende- und bedarfsweise Kompensationswege im Lichtfeld F aufgebaut werden, auf was weiter unten noch eingegangen wird. Bestehen die Lichtleiter z. B. aus mehreren Segmenten, muss nicht jedem Segment ein Empfänger bzw. Sender zugeordnet sein. In diesem Fall kann z.B. ein Empfänger oder eine Lichtquelle mehrere Segmente "bedienen".

Durch eine Taktschaltung 13 wird Licht wechselweise in die Lichtleiter 33, 34 eingespeist, das vom jeweiligen Empfänger empfangen wird. Vergleichsmittel sind vorgesehen, die die an den Empfängern vorliegenden Signale zum Erkennen des Objekts O vergleichen. In Fig. 3 unten ist die Lichtintensität für die beiden Darstellungen gemäß Fig. 3 oben dargestellt. Auf der Ordinate ist der Lichtfluss aufgetragen, während auf der Abszisse die normierte Lichtleiterkoordinate aufgetragen ist. Linie 55 zeigt die Messung von Fig. 3 oben links, Linie 56 die Messung von Fig. 3 oben rechts. Es zeigt sich eine symmetrische Darstellung, wobei lediglich im Mittelbereich die beiden Werte identisch sind, so dass dort bei einer Differenzwertbildung im Idealfall ein Wert zu Null herauskommen würde. Der Mittelbereich ist jedoch für die Erkennung eines Objekts zunächst unbeachtlich. Will man diesen Bereich ebenfalls erfassen, so können zusätzliche Messungen durch eine Aufteilung der Lichtleiter in mehrere Teile oder durch zusätzliche Leuchtdioden und Fotodioden an den Enden der Lichtleiter vorgenommen werden, um durch zusätzliche Messwerte auch diesen Bereich abzudecken.

Grundsätzlich ergeben sich bei der Messung folgende Probleme:

Verwendet man zwei Lichtquellen z.B. in Form von LEDs und einen Empfänger gemäss dem Prinzip der EP 0 706 648 B1, ist das Messverfahren empfangsseitig unempfindlich gegenüber Temperaturschwankungen und Nichtlinearitäten aufgrund starker Fremdlichteinstrahlung in der Empfangs-Photodiode. Auf der Senderseite beeinflusst der Wirkungsgrad der LEDs das Messergebnis. Wie die Gleichungen G 1) und G2) zeigen, geht nicht der Absolutwert des LED Wirkungsgrades ein, sondern nur das Verhältnis der beiden Werte.

Messsignal des Empfängers 1

$$U_1 = \frac{\eta_{L1}}{\eta_{L2}} K \frac{S_1}{S_{C2}} \qquad \text{G 1)}$$

Messsignal des Empfängers 2

$$U_2 = \frac{\eta_{L2}}{\eta_{L1}} K \frac{S_2}{S_{C1}} \qquad \text{G 2)}$$

mit:

$\eta_{L1}$ = Übertragungsfunktion Sender 1
$\eta_{L2}$ = Übertragungsfunktion Sender 2
$S_{C1}$ = optischer Dämpfungsfaktor Kompensationsweg Sender 1
$S_{C2}$ = optischer Dämpfungsfaktor Kompensationsweg Sender 2
$S_1$ = optischer Dämpfungsfaktor Sendeweg Sender 1
$S_2$ = optischer Dämpfungsfaktor Sendeweg Sender 2
$K$ = Systemkonstante

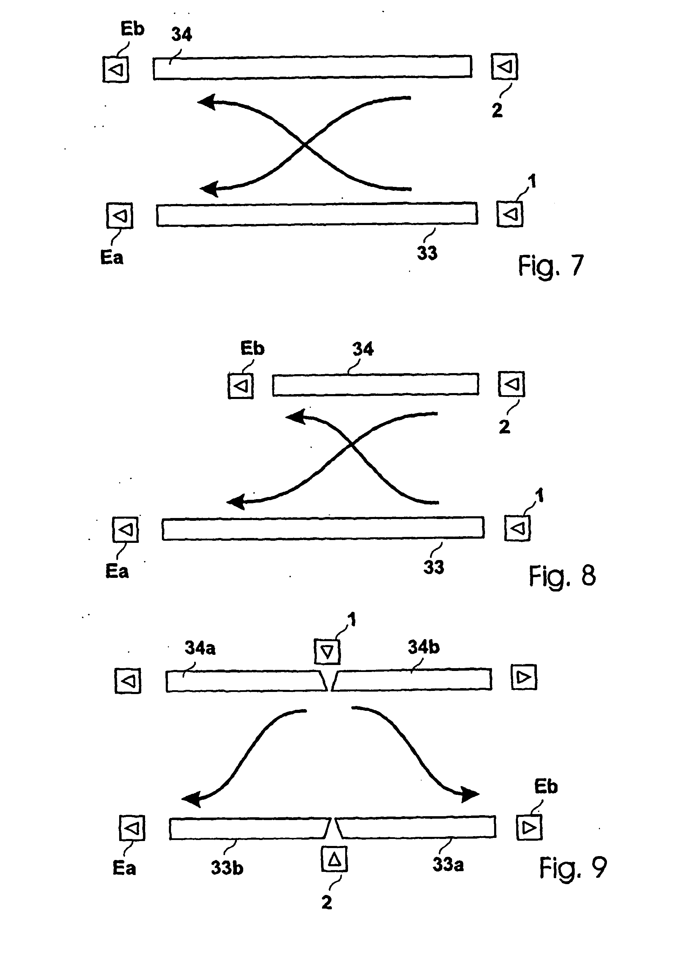

Sendewege sind z.B. die in den Figuren 7 bis 11 eingezeichneten Wege entlang der Pfeile, während ein Kompensationsweg üblicherweise der Weg vom Kompensationselement zum Empfänger meist im Lichtleiter ist. Ist in Fig. 3 oben links die Lichtquelle 1 der Sender, so verläuft der Sendeweg zum Empfänger Ea über die Lichtleiter 33,34 und die Öffnung 11. Die Lichtquelle 2 ist in diesem Moment das Kompensationselement, so dass der Kompensationsweg von der Lichtquelle 2 zum Empfänger Ea durch den Lichtleiter 34 verläuft.

Wenn beide LEDs gleichmäßigen Temperaturänderungen unterliegen, wird der Messwert also nicht beeinflusst. Da aber z.B. in der Anwendung als Einklemmschutz z.B. eines Schiebedachs die Lichtquellen 1, 2 aufgrund ihrer großen Entfernung zueinander unterschiedliche Temperaturen aufweisen können, kann der Messwert von der Temperatur beeinflusst werden. Dies beschränkt die absolute Messgenauigkeit des Systems.

Daher wird zur Zeit ein dynamisches Messverfahren verwendet, dessen Funktionsweise darauf beruht, schnelle Änderungen mit Zeitkonstanten kleiner als die Zeitkonstanten die mit Temperaturänderungen der LEDs verbunden sind zu detektieren und auszuwerten. Wenn Objekte O sich längere Zeit im Lichtfeld des Überwachungsbereichs befinden, ist es mit Hilfe einer dynamischen Messung jedoch schwierig zu entscheiden, ob die Objekte O nach längerer Zeit immer noch vorhanden sind oder nicht.

Daher ist es wünschenswert, eine statische Messung mit absoluter Genauigkeit durchzuführen und den Temperatureinfluss der Lichtquellen im Messergebnis zu unterdrücken. Dies kann z. B. mit der in Fig. 6 gezeigten Anordnung erfolgen. Das Verfahren beruht darauf, zwei Messungen mit den unterschiedlichen Empfangselementen Ea und Eb durchzuführen und bei beiden Messung die gleichen Sendelemente 1 und 2 zu verwenden. Die beiden Messphasen werden von der Verarbeitungseinheit 14 (z.B. einem Mikroprozessor) sequentiell aktiviert. Für die erste Messung gemäß Fig. 3 oben links wird nur das Messsignal 28 von der Verarbeitungseinheit 14 ausgewertet. Die Umschalter 15, 18, 19 befinden sich für diese Messung in der in Fig. 6 gezeigten Position.

Über den zentralen Taktgenerator der Taktschaltung 13 werden die Stromquellen oder Modulatoren 17 und 16 moduliert, wobei die Phasenverschiebung zwischen beiden Modulatoren 180 Grad beträgt. Bei rechteckförmigen Modulationssignalen werden die Lichtquellen 1, 2 also wechselseitig ein- und ausgeschaltet und strahlen ihr Licht in die Lichtleiter 33, 34 ein. Der Empfangsverstärker 6 mit ggf. vorgeschaltetem Hochpass verstärkt den Wechselanteil des von dem Empfänger Ea, z.B. einer Photodiode, erzeugten Photostroms. Im Synchrondemodulator 9 wird das verstärkte Empfangssignal getrennt in die beiden Anteile, die von den Lichtquellen 1 und 2 erzeugt wurden, und ggf. über Tiefpässe geschaltet. Der Vergleicher 8 wertet die Differenz beider Empfangssignale aus und steuert die Stromstärke des Modulators 16 in der Weise, dass die Signaldifferenz am Eingang des Vergleichers 8 zu Null wird. Die Lichtquelle 1 ist in diesem Moment ein Kompensationselement. Alternativ können auch zusätzlich Kompensationsmittel vorgesehen sein, die von den Lichtquellen 1, 2, 3, 4 unabhängig sind. Diese Art der Messsignalgewinnung einer Einzelmessung entspricht dem Stand der Technik nach der EP 0 706 648 B1.

Die Stromquelle 35 beaufschlagt die Lichtquelle 1, 2 zusätzlich zum modulierten Strom mit einem unmodulierten Gleichstrom. Dadurch kann man erreichen, dass das Kompensationselement mit dem gleichen Strom betrieben wird wie die Lichtquelle 2. Dies ist vorteilhaft, um den Wirkungsgrad der Lichtquellen zwischen beiden Messungen konstant zu halten.

Die Verarbeitungseinheit 14 legt das Signal 28 in einem Zwischenspeicher ab. Nun erfolgt die zweite Messung gemäß Fig. 3 oben rechts, indem die Umschalter 15, 18 und 19 in die andere Position geschaltet werden und die Taktschaltung 13 aktiviert wird. Die Lichtquelle 2 wird durch Veränderung der Stromamplitude des Modulators 16 durch den Regelkreis bestehend aus dem Empfänger Eb, dem Empfangsverstärker 22 mit ggf. vorgeschaltetem Hochpass, dem Synchrondemodualtor 23, ggf. vorhandenen Tiefpässen, dem Vergleicher 26 und dem Modulator 16, 17 so eingestellt, das die Differenz am Eingang des Vergleichers zu Null wird. Wenn das geschehen ist, wird das Signal 27 von der Verarbeitungseinheit 14 abgespeichert.

Die Signale 27, 28 werden von der Arithmetikeinheit 29 mittels Multiplizierer 36 multipliziert. Wie aus der Systemgleichung G 3) ersichtlich ist, ist dieses Produkt nicht mehr abhängig von der Übertragungsfunktion der Sender, wodurch insbesondere die Temperaturabhängigkeit der Sender bzw. Lichtquellen 1, 2 im Messsignal nicht mehr zum tragen kommt.

$$U_1 * U_2 = K^2 \frac{S_1 S_2}{S_{C1} S_{C2}} \qquad\qquad \text{G 3)}$$

mit:

$\eta_{L1}$ = Übertragungsfunktion Sender 1
$\eta_{L2}$ = Übertragungsfunktion Sender 2
$S_{C1}$ = optischer Dämpfungsfaktor Kompensationsweg Sender 1
$S_{C2}$ = optischer Dämpfungsfaktor Kompensationsweg Sender 2
$S_1$ = optischer Dämpfungsfaktor Sendeweg Sender 1
$S_2$ = optischer Dämpfungsfaktor Sendeweg Sender 2
K = Systemkonstante

Durch Vergleich des Produktes 30 mit einem statischen Referenzwert kann beim Zulaufen des Schiebedachs erkannt werden, ob sich ein Objekt O im Lichtfeld F befindet. Da das zufahrende Schiebedach das Messsignal vergrößert, kann es sinnvoll sein, den Referenzwert als eine von der Schiebedachposition abhängige Kennlinie zu speichern. Diese Referenzwertkennlinie kann durch Lernlauf oder Adaptionsverfahren während des Betriebes an Verschmutzungs- und Alterungseinflüsse angepasst werden. Damit ist eine statische Messung dahingehend möglich, ob sich gerade ein Objekt im Lichtfeld F bewegt. Anstelle oder ergänzend zum Produkt kann auch eine Division durchgeführt werden. Dadurch würde ebenfalls die Temperaturabhängigkeit eliminiert.

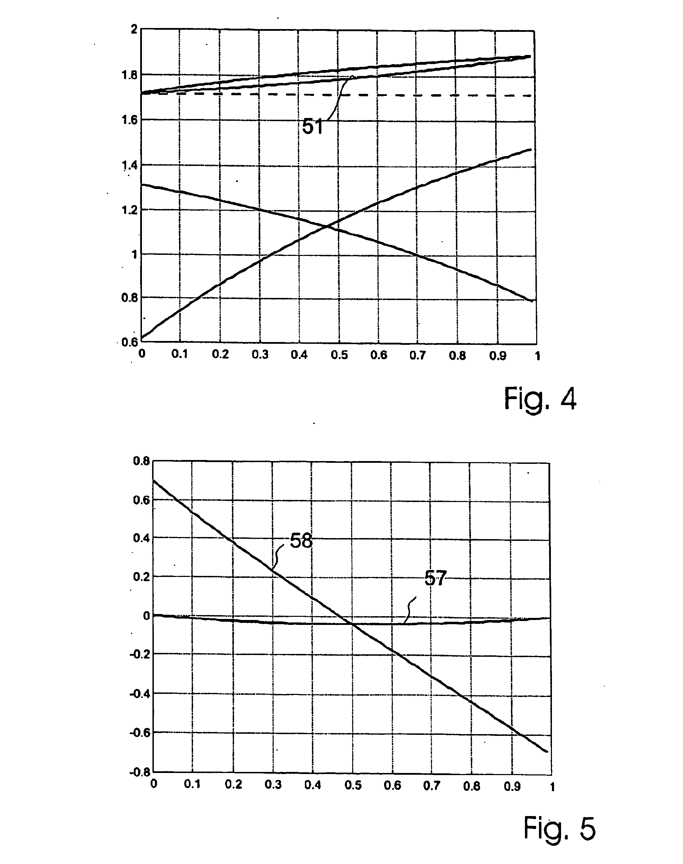

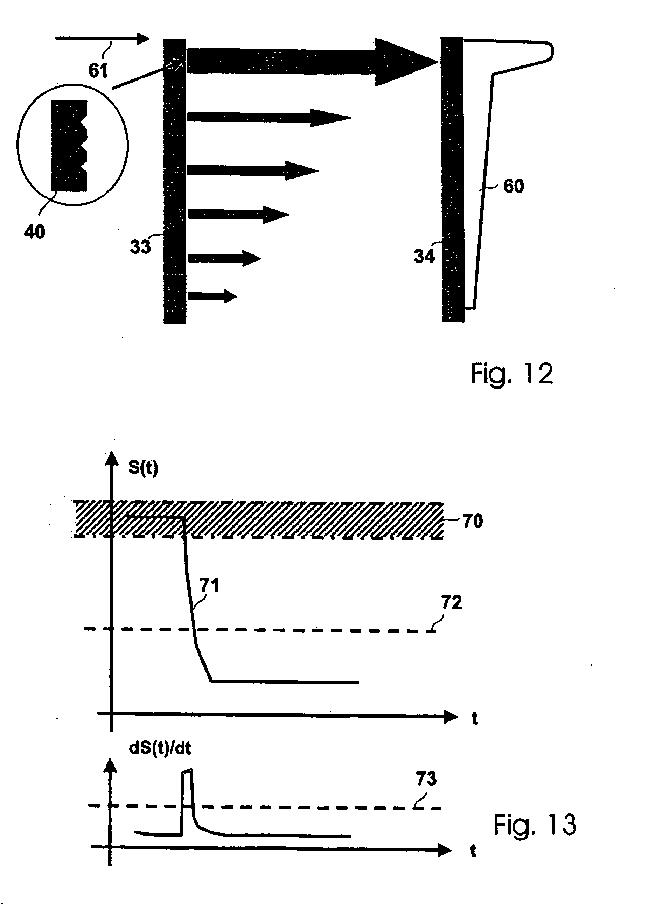

Ergänzend wird die Differenz 31 der Signale 27 und 28 von der Arithmetikeinheit 29 gebildet. Dies ermöglicht es, den störenden Einfluss des zufahrenden Schiebedachs auf das Messsignal zu unterdrücken. Die Differenz bei geöffnetem und geschlossenem Schiebedach ist konstant und entspricht einem Referenzwert, der idealerweise Null ist. Während das Schiebedach zufährt, entsteht eine Abweichung des Differenzwertes gemäß der Linie 51 in Fig. 4 vom Referenzwert. Diese Abweichung verringert sich aber wieder zu Null, wenn das Schiebedach zugefahren ist. Wird ein Lichtfeld F mit einer entlang des Lichtleiters abnehmenden Lichtstärke erzeugt, verursacht ein Objekt O im Lichtfeld eine Abweichung der Differenz 31 vom Referenzwert (Fig. 4, 5). Diese Abweichung wird umso größer, je näher sich das Objekt an der Schließkante 61 des Schiebedaches befindet. Somit kann anhand des Trends der Differenz 31 erkannt werden, ob bei zufahrendem Schiebedach sich ein Objekt O im Schiebedachausschnitt befindet, selbst wenn sich dieses Objekt dort schon länger befunden hat (statische Messung). Wird die Lichtstärke im Bereich der Schließkante gemäß Fig. 12 vergrößert, erhöht sich die Detektionsempfindlichkeit; die Differenz 31 wird im Bereich der Schließkante 61 bei gleicher Objektgröße erhöht, wodurch auch kleinere Objekte erkannt werden können. So ergibt sich die in Fig. 12 dargestellte Sende-/Empfangscharakteristik 60. Zu diesem Zweck kann die Struktur 40 an dieser Stelle zur entsprechenden Ausbildung eines nichtlinearen Lichtgradienten entlang des Lichtleiters entsprechend ausgebildet sein. Diese statische Messung benötigt nur einen Kalibrierwert, nämlich die Differenz 31 ohne Objekt. Somit ergibt sich gegenüber der Einzelmessung oder auch Produktauswertung ein wesentlich geringerer Kalibrieraufwand.

Vorzugsweise kann die statische Messung während des Zufahrens des beweglichen Elements 12 zu Gunsten der dynamischen Messung abgeschaltet werden, da in diesem Fall durch die bis dahin ggf. wechselweise mit der dynamischen Messung durchgeführte statische Messung sichergestellt ist, dass sich kein Objekt im Lichtfeld F befindet. Gleichwohl ist auch eine statische Messung grundsätzlich immer möglich, jedoch ggf. mit erhöhtem Kalibrierungsaufwand aufgrund der Bewegung des beweglichen Elements 12, also z.B. des Schiebedachs.

Fig. 13 zeigt den Signalverlauf 71 an der Schließkante 61 bei Vorhandensein eines Objekts über die Zeit. Ohne Objekt liegt der Toleranzbereich 70 vor. Bei Vorhandensein eines Objekts verändert sich das Signal, bis eine statische Schwelle 72 unterschritten wird. Auch die dynamische Messung im Bild unten führt zu einem Signal, sobald die dynamische Schwelle 73 überschritten wird.

Die Differenz 31 ist nicht temperaturkompensiert. Die Temperatur der Lichtquellen 1, 2 kann aber über ihre Flussspannung während der Bestromung gemessen werden. Indem die Flussspannung durch Anpassen der maximalen Sendestromamplitude konstant gehalten wird, kann der Temperatureinfluss der Sendedioden auf das Messsignal ebenfalls kompensiert werden.

Grundsätzlich können mehrere Lichtleiter 34a, 34b entlang wenigstens einer Seite der Öffnung vorgesehen sein. Die Lichtleiter 33, 34 sind entlang der Bewegungsrichtung 39 des beweglichen Teils 12 und/oder spiegelbildlich zueinander angeordnet. Will man eine gleichmäßige Lichtausbreitung erreichen, so kann die Struktur 40 der Lichtleiter mit zunehmendem Abstand vom Sendeelement vermehrt und/oder sich steigernd vorgesehen sein. Vorzugsweise ist die Struktur 40 so ausgebildet, dass sie die Lichtstärke in dem Bereich erhöht, in dem sich das bewegliche Teil 12 am Ende seiner Schließbewegung befindet. Über das Signal 38 kann ein motorischer Antrieb 20 für das bewegliche Teil 12 angesteuert werden.

Dem Lichtleiter 33, 34 kann ein Kompensationselement zur Fremdlichtkompensation durch Regelung der in die Messanordnung durch wenigstens eine Lichtquelle eingestrahlten Lichtintensität zugeordnet sein, so dass der taktsynchrone Wechsellichtanteil zu Null wird, der zwischen unterschiedlichen Phasen der Lichtquellen auftritt. Die Lichtquellen sind dabei zeitsequenziell getaktet und senden das Licht phasenweise aus. Das Kompensationselement kann die dem empfangenden Lichtleiter zugeordnete Lichtquelle 1, 2, 3, 4 sein. Lichtquelle und Empfänger sind mit einer Regelung verbunden, mit der das Lichtsignal der als Lichtquelle verwendeten Leuchtdioden mit einem weiteren modulierten Lichtsignal so kompensiert wird, dass am Empfänger im Wesentlichen ein Gleichlichtsignal ansteht. Dabei kann der zeitliche Mittelwert des Stroms, der zur Erzeugung des weiteren modulierten Lichtsignals erforderlich ist und/oder der zeitliche Mittelwert desjenigen Stroms, der der wenigstens einen Leuchtdiode zugeführt wird, so eingestellt werden, dass sie sich einander im Wesentlichen entsprechen.

Die Vorrichtung ist vorzugsweise einem Fahrzeugschiebedach, einem Fensterheber, einem Rollo oder einem Teil einer Kofferraumüberwachung zugeordnet. Für eine Ambientenbeleuchtung z.B. zur Betonung des Schiebdachs mittels eines Lichtkranzes können die Lichtleiter 33, 34 zumindest teilweise transparent sein und das Licht kann eine Wellenlänge in einem für das menschliche Auge sichtbaren Bereich aufweisen. Die Taktfrequenz ist üblicherweise eine für das menschliche Auge nicht wahrnehmbare Frequenz. Alternativ kann der Lichtleiter ggf. auch über eine weitere Lichtquelle als Zusatzbeleuchtung verwendet und z.B. zur Betonung gedimmt werden. Dies stört seinen Einsatz als Einklemmschutz oder Objekterkennungsmittel insbesondere dann nicht, wenn zugleich eine Fremdlichtkompensation stattfindet, da dann auch das Licht der weiteren Lichtquelle bei der Signalauswertung kompensiert wird.

Verfahrensgemäß werden zur Erkennung statischer Änderungen, die an den Empfängern vorliegenden Signale mittels eines Multiplizierers 36 miteinander multipliziert oder alternativ durcheinander dividiert. Der so ermittelte Wert wird mit einem Referenzwert verglichen, wie er sich insbesondere aus der Linie 51 ergibt. Vorzugsweise ist der Referenzwert eine über den Bewegungsweg des beweglichen Teils 12 erstellte Kennlinie, die von der Position des beweglichen Teils abhängig ist. Es zeigt sich in Fig. 4, dass beim Vorhandensein eines Objekts O eine Auslenkung stattfindet, die durch das Schiebedach nicht beeinflusst wird. Bei Bildung eines Differenzwertes ist somit auch ein sich länger in der Öffnung befindendes Objekt O erkennbar. Insbesondere Fig. 5 zeigt Differenzsignale, wobei Linie 57 das Differenzsignal aufgrund der Reflektion des Schiebedachs zeigt und Linie 58 das Differenzsignal aufgrund eines absorbierenden Gegenstands, der sich im Lichtfeld bewegt und vor der Kante des zufahrenden Schiebedachs befindet, im Lichtfeld überlagert mit dem Einfluss des Schiebedachs. Damit ist deutlich das Objekt O zu erkennen.

Die Figuren 7 bis 10 zeigen beispielhaft verschiedene Anordnungen der Lichtquellen 1, 2 als Sender und Kompensationselement und der Empfänger. Während in Fig. 6 die Lichtquellen als Sender und Kompensationselement als auch die beiden Empfänger bezüglich der Öffnung diagonal gegenüberliegend angeordnet sind, sind in Fig. 7 die Empfänger an einem Ende auf beiden Seiten der Öffnung und die beiden Lichtquellen am anderen Ende. Dabei ist eine beliebige Anordnung der Lichtleiter an den Kanten der Öffnung möglich und gemäß Fig. 8 müssen die Lichtleiter auch nicht gleich lang sein.

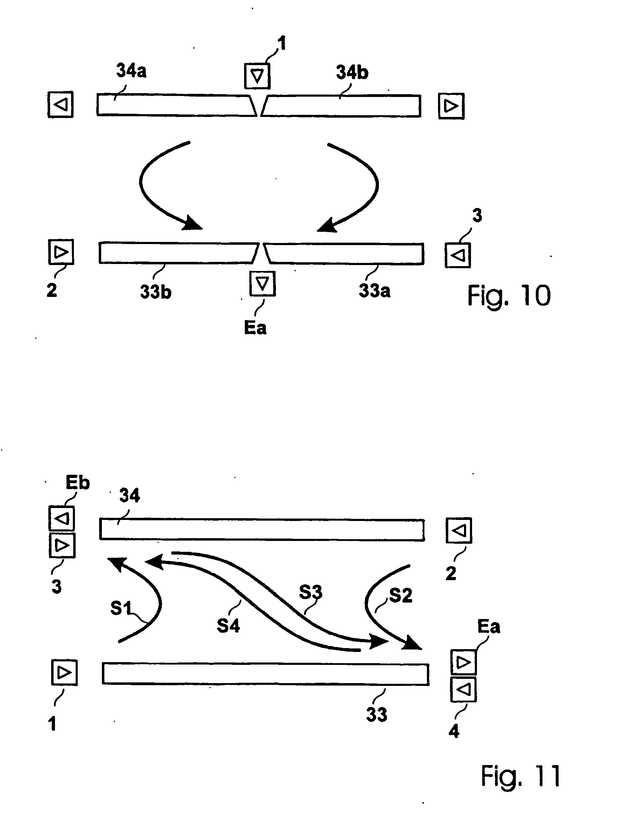

In Fig. 9 sind die Lichtquellen als Sender und Kompensationselement an einer Stelle entlang der Lichtleiter 33a, 33b bzw. 34a, 34b bzw. an deren Übergangsbereich, wobei dort entsprechende Einkoppelstellen in Form von Schrägen vorgesehen sind. Die Empfänger sind am Ende der Lichtleiter 33a, 33b angeordnet. Weitere Empfänger können auch am anderen Lichtleiter 34a, 34b vorgesehen sein. In Fig. 10 wird gegenüber Fig. 9 die Anordnung der Kompensationselemente und Empfänger vertauscht, so dass der Empfänger Ea mittig zwischen den Lichtleitern 33a und 33b angeordnet ist und weitere Lichtquellen 2,3 an deren Enden angeordnet sind. Auch hier können bedarfsweise weitere Lichtquellen oder Empfänger vorgesehen sein. Dabei wird deutlich, dass eine Lichtquelle oder ein Empfänger bei einer derartigen Anordnung gleichzeitig auch mehreren Lichtleitern zugeordnet sein können. Die Fig. 7 bis 10 zeigen nur einige mögliche Anordnungen, der Fachmann kann jedoch weitere geeignete Anordnungen ausfindig machen, solange verschiedene Messungen über die Öffnung möglich sind.

Durch die aus der EP 0 706 648 B1 bekannte Fremdlichtkompensation können auch kleinste Signale noch deutlich erfasst werden. Damit kann auch ein Niederschlag im Lichtfeld wahrgenommen werden, so dass in Folge des Niederschlags eine Schließfunktion eingeleitet werden kann. Der Empfänger kann auch starke Sonneneinstrahlung im Bereich des Lichtfelds wahrnehmen und daraufhin eine automatische Schließung des beweglichen Teils 12 einleiten. Lichtinformationen über Bewegungen im Innenraum eines Fahrzeugs und/oder an den Scheiben eines Fahrzeugs sind mittels der Lichtleiter und der zugeordneten Empfänger Ea, Eb erkennbar, so dass mit der Vorrichtung zugleich eine Überwachung durchgeführt werden kann.

Gleichzeitig ist das System weitestgehend resistent gegen Umwelteinflüsse wie Temperatur, Fremdlicht, Rauch, Staub, Nebel, Reflektionen, Kratzer am Lichtleiter. Gegebenenfalls kann durch zyklische Adaptionsprozesse eine systembedingte Alterung der Teilkomponenten bzw. Verschmutzungen im Bereich der Lichtleiter entgegnet werden. Reflektionen z. B. durch den zulaufenden Deckel oder das Rollo können über einen Lernlauf oder Adaptionsverfahren kompensiert werden.

Durch die Empfindlichkeit des Systems kann den Gesetzesanforderungen insbesondere für den Einsatzzweck im Schiebedach Genüge getan werden, selbst wenn diese Systemreaktionszeiten so ausgelegt werden, dass unter Worst-Case-Bedingungen keine Einklemmkräfte von >100 N bei einer Federrate von ≥10 N/mm bzw. ≤65 N/mm im Öffnungsbereich von 4 bis 200 mm erreicht werden. Die Systemreaktionszeit ergibt sich damit aus der Forderung eine Einklemmung mit einer Federrate von 65 N/mm sicher zu erkennen, wobei sie die maximal auftretende Einklemmkraft 100 N nicht überschreiten darf. Dies hat entsprechende Konsequenzen für die Auslegung des Systems insbesondere im Hinblick auf die Signalverarbeitung.

Hinsichtlich der Systemflexibilität sind systemrelevante, fahrzeugspezifische Daten wie Lichtfeldgeometrien, Dachdeckel usw. über eine Schnittstelle parametrisierbar. Weitere Parameter können Kennfelder zur Fahrzeuggeschwindigkeit, Kennfelder zur Außentemperatur, Kennfelder zur Auslöseschwelle (damit lässt sich die Systemreaktionszeit und damit die geforderte Einklemmschutzgüte beeinflussen) und Kennfelder zur Detektion in Abhängigkeit der Rollo- oder Dachposition sein. Damit lässt sich die Systemrobustheit steigern.

Die Messgenauigkeit kann durch weitere Messungen erhöht werden, indem z. B. entweder die Lichtleiter in mehrere Lichtleiter aufgeteilt werden oder an ihren beiden Enden Empfänger und Sender vorgesehen sind. Schon allein dadurch kann z.B. gemäß Fig. 11 mit dem bidirektionalen Lichtfeld eine Anzahl von acht Messungen erreicht werden, um das sich ergebende Gleichungssystem zu lösen. In diesem Fall sind zwei Lichtquellen 1, 2 an dem einen Ende der Lichtleiter angeordnet, während am jeweils anderen Ende der Lichtleiter je ein Empfänger Ea, Eb und eine Lichtquelle 3 bzw. 4 vorgesehen ist. Bedarfsweise könnte auch den Lichtquellen 1 und 2 noch ein Empfänger zugeordnet werden, um die Zahl der möglichen Messungen zu erhöhen.

In diesem Fall ergeben sich die folgenden acht Grundgleichungen:

Messsignale des ersten Empfängers Eb

$$U_{1a} = \frac{\eta_{L1}}{\eta_{L2}} K \frac{S_1}{S_{C2}} \qquad\qquad \text{G 4)}$$

$$U_{1b} = \frac{\eta_{L1}}{\eta_{L3}} K \frac{S_1}{S_{C3}} \qquad\qquad \text{G 5)}$$

$$U_{1c} = \frac{\eta_{L4}}{\eta_{L2}} K \frac{S_4}{S_{C2}} \qquad\qquad \text{G 6)}$$

$$U_{1d} = \frac{\eta_{L4}}{\eta_{L3}} K \frac{S_4}{S_{C3}} \qquad\qquad \text{G 7)}$$

Messsignale des zweiten Empfängers Ea

$$U_{2a} = \frac{\eta_{L2}}{\eta_{L1}} K \frac{S_2}{S_{C1}} \qquad \text{G 8)}$$

$$U_{2b} = \frac{\eta_{L2}}{\eta_{L4}} K \frac{S_2}{S_{C4}} \qquad \text{G 9)}$$

$$U_{2c} = \frac{\eta_{L3}}{\eta_{L1}} K \frac{S_3}{S_{C1}} \qquad \text{G 10)}$$

$$U_{2d} = \frac{\eta_{L3}}{\eta_{L4}} K \frac{S_3}{S_{C4}} \qquad \text{G 11)}$$

mit:
$\eta_{L1}$ = Übertragungsfunktion Sender 1
$\eta_{L2}$ = Übertragungsfunktion Sender 2
$\eta_{L3}$ = Übertragungsfunktion Sender 3
$\eta_{L4}$ = Übertragungsfunktion Sender 4
$S_{C1}$ = optischer Dämpfungsfaktor Kompensationsweg Sender 1
$S_{C2}$ optischer Dämpfungsfaktor Kompensationsweg Sender 2
$S_{C3}$ = optischer Dämpfungsfaktor Kompensationsweg Sender 3
$S_{C4}$ optischer Dämpfungsfaktor Kompensationsweg Sender 4
$S_1$ = optischer Dämpfungsfaktor Sendeweg Sender 1
$S_2$ = optischer Dämpfungsfaktor Sendeweg Sender 2
$S_3$ = optischer Dämpfungsfaktor Sendeweg Sender 3
$S_4$ = optischer Dämpfungsfaktor Sendeweg Sender 4
K = Systemkonstante

Die folgenden Verknüpfungen der Grundgleichungen G 4 bis G 11 sind unabhängig vom Wirkungsgrad der Sender, wodurch wieder die Temperaturabhängigkeit der Sendeelemente in den Messungen kompensiert wird:

$$U_{1b} * U_{2c} = K^2 \frac{S_1 S_3}{S_{C1} S_{C3}} \qquad \text{G 12)}$$

$$U_{1c} * U_{2b} = K^2 \frac{S_4 S_2}{S_{C4} S_{C2}} \qquad \text{G 13)}$$

$$U_{1a} * U_{2a} = K^2 \frac{S_1 S_2}{S_{C1} S_{C2}} \qquad \text{G 14)}$$

$$U_{1d} * U_{2d} = K^2 \frac{S_3 S_4}{S_{C3} S_{C4}} \qquad \text{G 15)}$$

Der Messablauf ist hierbei wie folgt:

1) Erzeugung des Signals $U_{1a}$:
Über den Empfänger Eb wird das Licht der Lichtquelle 1 und das Licht der Lichtquelle 2 empfangen. Das Empfangssignal, welches die Lichtquelle 1 im Empfänger Eb erzeugt, wird mit dem Empfangssignal, das die Lichtquelle 2 in Eb hervorrurft, verglichen, Durch Leistungs-regelung der Lichtquelle 2 wird die Lichtleistung so eingestellt, dass am Empfänger Eb von beiden Lichtquellen 1 und 2 das gleiche Signal empfangen wird. Das Messsignal $U_{1a}$ ist proportlonal zur Sendeleistung der Lichtquelle 2.
Die anderen Messsignale werden in analoger Weise gewonnen, wobei sich für jedes Empfangselement aus den Kombinationen der beiden Sendeelemente bzw. Lichtquellen 1, 2, 3, 4 auf der Sendelichtleilerseite und den beiden Sendeelementen bzw. Lichtquellen 1, 2, 3, 4 auf der Empfangslichtleiterseite vier Messungen ergeben: Im folgenden wird die Lichtquelle, die in ihrer Lichtleistung geregelt wird, als Kompensationselement bezeichnet.
2) Erzeugung des Signals $U_{1b}$:

Lichtquelle 1: Sendeelement
Lichtquelle 3: Kompensationselement
Eb: Empfänger

3) Erzeugung des Signals $U_{1c}$:

Lichtquelle 4: Sendeelement

Lichtquelle 2: Kompensationselement

Eb: Empfänger

4) Erzeugung des Signals $U_{1d}$:

Lichtquelle 4: Sendeelement

Lichtquelle 3: Kompensationselement

Eb: Empfänger

5) Erzeugung des Signals $U_{2a}$:

Lichtquelle 2: Sendeelement

Lichtquelle 1: Kompensationselement

Ea: Empfänger

6) Erzeugung des Signals $U_{2b}$:

Lichtquelle 2: Sendeelement

Lichtquelle 4: Kompensationselement

Ea: Empfänger

7) Erzeugung des Signals $U_{2c}$:

Lichtquelle 3: Sendeelement

Lichtquelle 1: Kompensationselement

Ea: Empfänger

8) Erzeugung des Signals $U_{2d}$:

Lichtquelle 3: Sendeelement

Lichtquelle 4: Kompensationselement

Ea: Empfänger

Die Produkte $U_{1b}*U_{2c}$, $U_{1c}*U_{2b}$, $U_{1a}*U_{2a}$ und $U_{1d}*U_{2d}$ enthalten keine Abhängigkeit mehr von den Übertragungsfunktionen $\eta_{L1}$, $\eta_{L2}$, $\eta_{L3}$, $n_{L4}$ der Sendelemente, wodurch insbesondere ein Temperatureinfluss aufgrund einer Temperaturdifferenz zwischen Sendeelement und Kompensationselement eliminiert wird.

Bezugszeichenliste

| | |
|---|---|
| 1, 2, 3, 4 | Lichtquelle |
| 6, 22 | Empfangsverstärker |
| 8, 26 | Vergleicher |
| 9, 23 | Synchrondemodulator |
| 11 | Öffnung |
| 12 | bewegliches Teil |
| 13 | Taktschaltung |
| 14 | Verarbeitungseinheit |
| 15, 18, 19 | Umschalter |
| 16, 17 | Modulator |
| 20 | motorischer Antrieb |
| 27, 28 | Signal |
| 29 | Arithmetikeinheit |
| 30 | Produkt |
| 31 | Differenz |
| 32 | Steuereinheit |
| 33 | erster Lichtleiter |
| 34 | weiterer Lichtleiter |
| 34a, 34b | mehrere Lichtleiter |
| 35 | Stromquelle |
| 36 | Multiplizierer |
| 37 | Differenzbildner |
| 38 | Steuersignal |
| 39 | Bewegungsrichtung |
| 40 | Struktur |
| 51,52,53 | Linie |
| 54 | Lichtpfad |
| 55...58 | Linie |
| 60 | Sende-/Empfangscharakteristik |
| 61 | Schließkante |
| 70 | Toleranzband ohne Objekt |
| 71 | Signalkennlinie über die Zeit |
| 72 | statische Schwelle |
| 73 | dynamische Schwelle |
| Ea, Eb | Empfänger |
| F | Lichtfeld |
| O | Objekt |

**Patentansprüche**

**1.**  Vorrichtung zum Erkennen eines Objekts (O) in oder an einer verschließbaren Öffnung (11), insbesondere der Öffnung eines Fahrzeugs, mit einer Vorrichtung zum Öffnen und Schließen der Öffnung mittels eines beweglichen Teils (12) sowie mit einer optoelektronischen Detektionseinrichtung zum Erkennen des Objekts, wobei ein Lichtleiter zumindest teilweise entlang des Rands der Öffnung (11) angeordnet ist,
**dadurch gekennzeichnet,**

- **dass** wenigstens ein erster Lichtleiter (33) Mittel zum Aussenden von Licht quer zu seiner Längserstreckung aufweist und wenigstens ein zweiter Lichtleiter (34) vorgesehen ist, der Mittel zur Einstrahlung von Licht quer zu seiner Längserstreckung aufweist und mit einem Empfänger (Ea) in Wirkverbindung steht,
- **dass** der wenigstens eine zweite Lichtleiter (34) Mittel zum Aussenden von Licht quer zu seiner Längserstreckung aufweist und der wenigstens eine erste Lichtleiter (33) Mittel zur Einstrahlung von Licht quer zu seiner Längserstreckung aufweist und mit einem weiteren Empfänger (Eb) in Wirkverbindung steht,
- **dass** die ersten und zweiten Lichtleiter (33, 34) am Rand der Öffnung (11) so angeordnet sind, dass sich wenigstens ein zumindest teilweise die Öffnung überbrückendes bidirektionales Lichtfeld (F) ergibt,
- **dass** zumindest einem Teil der ersten und zweiten Lichtleiter (33, 34) jeweils wenigstens eine Lichtquelle (1, 2, 3, 4) zugeordnet ist,
- **dass** eine Taktschallung (13) vorgesehen ist, die Licht wechselweise in die ersten und zweiten Lichtleiter (33, 34) einspeist, das vom jeweiligen Empfänger (Ea, Eb) empfangen wird und das wechselnde Lichtfeld bildet, und
- **dass** Vergleichsmittel vorgesehen sind, die die aus den jeweiligen Lichtleitern stammenden, an den Empfängern (Ea, Eb) vorliegenden Signale aus dem Lichtfeld zum Erkennen des Objekts (O) vergleichen.

2. Vorrichtung nach Anspruch 1, **dadurch gekennzeichnet, dass** zur Temperaturkompensation ein Multiplizierer (36) oder ein Dividierer vorgesehen ist, der die an den Empfängern (Ea, Eb) vorliegenden Signale zur Erkennung von Änderungen miteinander multipliziert oder dividiert, und dass eine Steuereinheit (32) das Produkt oder das Divisionsergebnis mit einem Referenzwert vergleicht.

3. Vorrichtung nach Anspruch 1 oder 2, **dadurch gekennzeichnet, dass** der Referenzwert eine über den Bewegungsweg des beweglichen Teils (12) erstellte Kennlinie ist, die von der Position des beweglichen Teils abhängt.

4. Vorrichtung nach einem der Ansprüche1 bis 3, **dadurch gekennzeichnet, dass** ein Differenzbildner (37) zur Erkennung eines im Lichtfeld (F) befindlichen Objekts (O) vorgesehen ist, der aus den an den Empfängern (Ea, Eb) vorliegenden Signale eine Differenz bildet.

5. Vorrichtung nach einem der vorhergehenden Ansprüche, **dadurch gekennzeichnet, dass** die Lichtleiter auf einander gegenüber liegenden Seiten der Öffnung (11) vorgesehen sind und/ oder dass mehrere Lichtleiter (34a, 34b) entlang einer Seite der Öffnung (11) vorgesehen sind.

6. Vorrichtung nach einem der vorhergehenden Ansprüche, **dadurch gekennzeichnet, dass** die Lichtleiter (33, 34) entlang der Bewegungsrichtung (39) des beweglichen Teils (12) und/oder spiegelbildlich angeordnet sind.

7. Vorrichtung nach einem der vorhergehenden Ansprüche, **dadurch gekennzeichnet, dass** die Lichtleiter (33, 34) eine Struktur (40) zur Abstrahlung bzw. zur Einstrahlung des Lichts quer zu ihrer Längsrichtung aufweisen, die vorzugsweise mit zunehmendem Abstand vom Sendeelement vermehrt und/oder sich steigernd vorgesehen ist.

8. Vorrichtung nach Anspruch 7, **dadurch gekennzeichnet, dass** die Struktur (40) so ausgebildet ist, dass sie die Lichtstärke im dem Bereich erhöht, in dem sich das bewegliche Teil (12) am Ende seiner Schließbewegung befindet.

9. Vorrichtung nach einem der vorhergehenden Ansprüche, **dadurch gekennzeichnet, dass** ein motorischer Antrieb (20) zum Bewegen des beweglichen Tells (12) vorgesehen ist, der in Folge der am Empfänger (Ea, Eb) vorliegenden Signale ansteuerbar ist,

10. Vorrichtung nach einem der vorhergehenden Ansprüche, **dadurch gekennzeichnet, dass** dem Lichtleiter (33, 34) ein Kompensationselement zur Fremdlichtkompensation durch Regelung der in die Messanordnung durch wenigstens eine Lichtquelle (1, 2, 3, 4) eingestrahlten Lichtintensität zugeordnet ist, so dass der taktsynchrone Wechsellichtanteil zu Null wird, der zwischen unterschiedlichen Phasen der Lichtquellen auftritt, die Licht zeitsequentiell getaktet, phasenweise aussenden.

11. Vorrichtung nach Anspruch 10, **dadurch gekennzeichnet, dass** das Kompensationselement die dem empfangenden Lichtleiter zugeordnete Lichtquelle (1, 2, 3, 4) ist.

12. Vorrichtung nach einem der vorhergehenden Ansprüche, **dadurch gekennzeichnet, dass** die Lichtquelle (1, 2, 3, 4) und der Empfänger (Ea, Eb) mit einer Regelung verbunden sind, mit der das Lichtsignal der als Lichtquelle verwendeten Leuchtdioden mit einem weiteren modulierten Lichtsignal so kompensiert wird, dass am Empfänger im Wesentlichen ein Gleichlichtsignal ansteht, wobei der zeitliche Mittelwert des Stroms, der zur Erzeugung des weiteren modulierten Lichtsignals erforderlich ist, und/oder der zeitliche Mittelwert desjenigen Stroms, der der wenigstens einen Leuchtdiode zugeführt wird, einander im Wesentlichen entsprechen.

13. Vorrichtung nach einer der vorhergehenden Ansprüche, **dadurch gekennzeichnet, dass** die Vorrichtung einem Fahrzeugschiebedach oder einem Fensterheber oder einem Rollo zugeordnet ist oder Teil einer Kofferraumüberwachung ist.

14. Vorrichtung nach einem der vorhergehenden Ansprüche, **dadurch gekennzeichnet, dass** die Lichtielter (33, 34) zumindest teilweise transparent sind und dass das Licht eine Wellenlänge in einem für das menschliche Auge sichtbaren Bereich aufweist.

15. Verfahren zum Erkennen eines Objekts in oder an einer mittels eines beweglichen Teils (12) verschließbaren Öffnung (11) insbesondere eines Fahrzeugs, mit den Schritten:

   - Einspeisen von Licht in einen zumindest teilweise entlang der Öffnung (11) angeordneten Lichtleiter (33, 34),
   - Delektieren von Veränderungen im mittels eines Empfängers (Ea, Eb) empfangenen Licht,
   **gekennzeichnet, durch** die Schritte
   - Anordnen von wenigstens einem ersten Lichtleiter (33) und wenigstens einem zweiten Lichtleiter (34) entlang der Öffnung (11),
   - wechselweisse Aussenden von Licht aus dem wenigstens einen ersten und dem wenigstens einem zweiten Lichtleiter (33, 34) quer zu ihrer Längserstreckung zur Bildung eines die Öffnung (11) zumindest teilsweise überbrückenden bidirektionalen Lichtfelds (F),
   - Empfangen des Lichts mittels eines mit dem jeweils anderen Lichtleiter in Wirkverbindung stehenden Empfänger (Ea, Eb), und
   - Vergleichen der an den Empfängern (Ea, Eb) vorliegenden Signale aus dem wechselnden Lichtfeld zur Erkennung des Objekts (O).

16. Verfahren nach Anspruch 15, **dadurch gekennzeichnet, dass** die an den Empfängern (Ea, Eb) vorliegenden Signale zur Erkennung von Änderungen miteinander multipliziert oder dividiert werden und mit einem Referenzwert verglichen werden. ,

17. Verfahren nach Anspruch 16, **dadurch gekennzeichnet, dass** als Referenzwert eine über den Bewegungsweg des beweglichen Teils (12) erstellte Kennlinie gespeichert wird, die von der Position des beweglichen Teils abhängig ist.

18. Verfahren nach einem der Ansprüche 15 bis 17, **dadurch gekennzeichnet, dass** aus den an den Empfängern (Ea, Eb) vorliegenden Signalen eine Differenz zur Erkennung eines statisch im Lichtfeld (F) befindlichen Objekts (O) gebildet wird.

19. Verfahren nach einem der Ansprüche 15 bis 18, **dadurch gekennzeichnet, dass** die Lichtstärke des aus dem Lichtleiter (33, 34) ausgestrahlten Lichts im dem Bereich erhöht ist, in dem sich das bewegliche Teil (12) am Ende seiner Schließbewegung befindet.

20. Verfahren nach einem der Ansprüche 15 bis 19, **dadurch gekennzeichnet, dass** die Öffnung (11) mit dem beweglichen Tell (12) mittels eines motorischen Antriebs (20) geschlossen wird, der in Folge der am Empfänger (Ea, Eb) vorliegenden Signale angesteuert wird.

21. Verfahren nach einem der Ansprüche 15 bis 20, **dadurch gekennzeichnet, dass** das Objekt (O) ein Niederschlag ist und dass die Öffnung bei Erkennen eines Niederschlags geschlossen wird.

22. Verfahren nach einem der Ansprüche 15 bis 21, **dadurch gekennzeichnet**, das Licht in einem für das menschliche Auge sichtbaren Wellenlängenbereich und vorzugsweise mit einer für das menschliche Auge nicht wahmehmbaren Frequenz in die zumindest teilweise transparenten Lichtleiter (33, 34) eingestrahlt wird.

23. Verfahren nach einem der Ansprüche 15 bis 22, **dadurch gekennzeichnet, dass** der Empfänger (Ea, Eb) starke Sonneneinstrahlung im Bereich des Lichtfelds wahrnimmt und daraufhin eine automatische Schließung des beweglichen Teils (12) einleitet.

24. Verfahren nach einem derAnsprüche 15 bis 23, **dadurch gekennzeichnet, dass** das bewegliche Teil (12) ein Fahrzeugteil wie ein Schiebedach, ein Fensterheber oder ein Kofferraumdeckel ist.

25. Verfahren nach einem der Ansprüche 15 bis 24, **dadurch gekennzeichnet, dass** in dem zweiten Lichtleiter einfallendes Licht eine Lichtinformation über Bewegungen im Innenraum eines Fahrzeugs und/oder an den Scheiben eines Fahrzeugs enthält, die von einer Auswerteeinheit auswertbar ist.

26. Verfahren nach einem der Ansprüche 15 bis 25, **dadurch gekennzeichnet, dass** das Lichtsignal der als Lichtquelle (1, 2, 3, 4) verwendeten Leuchtdioden mit einem weiteren modulierten Lichtsignal so kompensiert wird, dass am Empfänger (Ea, Eb) im Wesentlichen ein Gleichlichtsignal ansteht, wobei der zeitliche Mittelwert des Stroms, der zur Erzeugung des weiteren modulierten Lichtsignals erforderlich ist, und/oder der zeitliche Mittelwert desjenigen Stroms, der der wenigstens einen Leuchtdiode zugeführt wird, so verändert wird, dass sich die zeitlichen Mittelwerte im Wesentlichen entsprechen.

**Claims**

1. Device for identifying an object (O) in or on a closable opening (11), in particular the opening of a vehicle, comprising a device for opening and closing the opening by means of a movable part (12) and an optoelectronic detection mechanism for identifying the object, a light guide being arranged at least partially along the edge of the opening (11), **characterized in that**

    - at least one first light guide (33) has means for emitting light transversely to its longitudinal extent and that at least one second light guide (34) is provided, which has means for receiving light transversely to its longitudinal extent and is in operative connection with a receiver (Ea),
    - the at least one second light guide (34) has means for emitting light transversely to its longitudinal extent and the at least one first light guide (33) has means for receiving light transversely to its longitudinal extent and is in operative connection with a further receiver (Eb),
    - the first and second light guides (33, 34) are arranged at the edge of the opening (11) in such a manner that a bidirectional light field (F) is produced which at least partially bridges the opening,
    - at least one light source (1, 2, 3, 4) each is associated with at least a part of the first and second light guides (33, 34),
    - a clock circuit (13) is provided, which feeds light in an alternating manner into the first and second light guides (33, 34), the light being received by the respective receiver (Ea, Eb) thus forming the alternating light field, and
    - comparison means are provided, which compare the signals from the light field present at the receivers (Ea, Eb), the signals being generated by the respective light guides, to identify the object (O).

2. Device according to claim 1, **characterized in that** a multiplier (36) or a divider is provided for temperature compensation, which multiplies or divides the signals present at the receivers (Ea, Eb) by one another to identify changes, and that a control unit (32) compares the product or the division result with a reference value.

3. Device according to claim 1 or 2, **characterized in that** the reference value is a characteristic curve which is set up by means of the movement path of the movable part (12), and depends on the position of the movable part.

4. Device according to any one of claims 1 to 3, **characterized in that** a difference generator (37) is provided for identifying an object (O) located in the light field (F) and generates a difference from the signals present at the receivers (Ea, Eb).

5. Device according to any one of the preceding claims, **characterized in that** the light guides are provided on opposing sides of the opening (11) and/or a plurality of light guides (34a, 34b) are provided along a side of the opening (11).

6. Device according to any one of the preceding claims, **characterized in that** the light guides (33, 34) are arranged along the movement direction (39) of the movable part (12) and/or mirror-symmetrically,

7. Device according to any one of the preceding claims, **characterized in that** the light guides (33, 34) have a structure (40) for radiating out or receiving the light transversely to their longitudinal direction, the structure (40) being preferably provided in an augmented and/or cumulative manner, with increasing distance from the transmitting element.

8. Device according to claim 7, **characterized in that** the structure (40) is configured such that it increases the light intensity in the region in which the movable part (12) is located at the end of its closing movement.

9. Device according to any one of the preceding claims, **characterized In that** a motor drive (20) is provided to move the movable part (12) and can be activated as a result of the signals present at the receiver (Ea, Eb).

10. Device according to any one of the preceding claims, **characterized in that** a compensation element for extraneous light compensation by control of the light intensity radiated into the measuring arrangement by at least one light source (1 2, 3, 4) Is associated with the light guide (33, 34), so that the clocked alternating light component, which occurs between different phases of the light sources emitting light in a phase-wise manner and clocked in a time-sequential manner, becomes zero.

11. Device according to claim 10, **characterized in that** the compensation element is the light source (1, 2, 3, 4) associated with the receiving light guide.

12. Device according to any one of the preceding claims, **characterized in that** the light source (1, 2, 3, 4) and the receiver (Ea, Eb) are connected to a control, with which the light signal of the light-emitting diodes used as the light source is compensated with a further modulated light signal in such a manner that a constant light signal is substantially present at the receiver, wherein the temporal average of the current, which is required to generate the further modulated light signal, and/or the temporal average of the current supplied to the at least one light-emitting diode, substantially correspond to one another.

13. Device according to any one of the preceding claims, **characterized in that** the device is associated with a sliding vehicle roof or a window closer or a blind or is part of a boot monitoring system.

14. Device according to any one of the preceding claims, **characterized in that** the light guides (33, 34) are at least partially transparent and the light has a wavelength in a range which is visible to the human eye.

15. Method for identifying an object in or on an opening (11) which can be closed by means of a movable part (12), in particular of a vehicle, comprising the steps of:

- feeding light into a light guide (33, 34) arranged at least partially along the opening (11),
- detecting changes in the light received by means of a receiver (Ea, Eb),
**characterized by** the steps of
- arranging at least one first light guide (33) and at least one second light guide (34) along the opening (11),
- alternately emitting light from the at least one first and the at least one second light guide (33, 34) transversely to their longitudinal extent to form a bidirectional light field (F) which at least partially bridges the opening (11),
- receiving the light by means of a receiver (Ea, Eb) that is in operative connection with the respective other light guide,
- comparing the signals from the alternating light field present at the receivers (Ea, Eb) to identify the object (O).

16. Method according to claim 15, **characterized in that**, to identify changes, the signals present at the receivers (Ea, Eb) are multiplied by one another or divided and are compared with a reference value.

17. Method according to claim 16, **characterized in that** a characteristic curve set up by means of the movement path of the movable part (12) is stored as the reference value and is dependent on the position of the movable part.

18. Method according to any one of claims 15 to 17, **characterized in that** a difference is generated from the signals present at the receivers (Ea, Eb) to identify an object (O) located statically in the light field (F).

19. Method according to any one of claims 15 to 18, **characterized in that** the light intensity of the light emitted from the light guide (33, 34) is increased in the region in which the movable part (12) is located at the end of its closing movement.

**20.** Method according to any one of claims 15 to 19, **characterized in that** the opening (11) with the movable part (12) is closed by means of a motor drive (20), which is activated as a result of the signals present at the receiver (Ea, Eb).

**21.** Method according to any one of claims 15 to 20, **characterized in that** the object (O) is a precipitation and the opening is closed on identification of a precipitation.

**22.** Method according to any one of claims 15 to 21, **characterized in that** the light is radiated Into the at least partially transparent light guides (33, 34) in a wavelength range which is visible to the human eye and preferably at a frequency which is not perceivable to the human eye.

**23.** Method according to any one of claims 15 to 22, **characterized in that** the receiver (Ea, Eb) senses strong insolation in the region of the light field and thereupon initiates automatic closing of the movable part (12).

**24.** Method according to any one of claims 15 to 23, **characterized in that** the movable part (12) is a vehicle part such as a sliding roof, a window closer or a boot lid.

**25.** Method according to any one of claims 15 to 24, **characterized in that** incident light in the second light guide contains light information about movements in the interior of a vehicle and/or at the windows of a vehicle, which can be evaluated by an evaluation unit.

**26.** Method according to any one of claims 15 to 25, **characterized in that** the light signal of the light-emitting diodes used as the light source (1, 2, 3, 4) is compensated with a further modulated light signal in such a manner that substantially a constant light signal is present at the receiver (Ea, Eb), wherein the temporal average of the current, which is required to generate the further modulated light signal, and/or the temporal average of the current, which is supplied to the at least one light-emitting diode, is changed in such a manner that the temporal averages substantially correspond.

## Revendications

**1.** Dispositif de reconnaissance d'un objet (O) dans ou sur une ouverture refermable (11), notamment l'ouverture d'un véhicule automobile, comprenant un dispositif d'ouverture et de fermeture de l'ouverture au moyen d'une partie mobile (12) et un dispositif de détection optoélectronique pour la reconnaissance de l'objet, le conducteur de lumière étant situé, au moins en partie, le long du bord de l'ouverture (11), **caractérisé**

- **en ce qu'**au moins un premier conducteur de lumière (33) est pourvu de moyens d'émission de lumière perpendiculairement à son étendue longitudinale et en ce que l'on prévoit au moins un second conducteur de lumière (34) qui est pourvu de moyens d'injection de lumière perpendiculairement à son étendue longitudinale et est en liaison fonctionnelle avec un récepteur (Ea),
- **en ce que** l'au moins un second conducteur de lumière (34) est pourvu de moyens d'émission de lumière perpendiculairement à son étendue longitudinale et l'au moins un premier conducteur de lumière (33) est pourvu de moyens d'injection de lumière perpendiculairement à son étendue longitudinale et est en liaison fonctionnelle avec un autre récepteur (Eb),
- **en ce que** les premier et second conducteurs de lumière (33, 34) sont situés sur le bord de l'ouverture (11) de manière à obtenir au moins un champ lumineux bidirectionnel (F) s'étendant d'un bord à l'autre d'au moins une partie de l'ouverture,
- **en ce qu'**au moins une source lumineuse (1, 2, 3, 4) est associée à chaque fois à au moins une partie des premier et second conducteurs de lumière (33, 34),
- **en ce que** l'on prévoit un circuit d'horloge (13) qui alimente alternativement dans les premier et second conducteurs de lumière (33, 34) de la lumière qui est reçue par le récepteur respectif (Ea, Eb) et forme le champ lumineux alterné et
- **en ce que** l'on prévoit des moyens comparateurs qui comparent les signaux du champ lumineux provenant des conducteurs de lumière respectifs et présents au niveau des récepteurs (Ea, Eb) pour reconnaître l'objet (O).

**2.** Dispositif selon la revendication 1, **caractérisé en ce que** l'on prévoit, pour la compensation de température, un multiplicateur (36) ou un diviseur qui multiplie ou divise entre eux les signaux présents au niveau des récepteurs (Ea, Eb) pour détecter des modifications et **en ce qu'**une unité de commande (32) compare le produit ou le résultat de la division à une valeur de référence.

3. Dispositif selon la revendication 1 ou 2, **caractérisé en ce que** la valeur de référence est une caractéristique établie sur le trajet de déplacement de la partie mobile (12) et qui dépend de la position de la partie mobile.

4. Dispositif selon l'une des revendications 1 à 3, **caractérisé en ce que** l'on prévoit un dispositif de formation de différence (37) pour la reconnaissance d'un objet (O) se trouvant dans le champ lumineux (F), lequel dispositif forme une différence à partir des signaux présents au niveau des récepteurs (Ea, Eb).

5. Dispositif selon l'une des revendications précédentes, **caractérisé en ce que** les conducteurs de lumière sont prévus sur des côtés de l'ouverture (11) opposés l'un à l'autre et/ou **en ce que** plusieurs conducteurs de lumière (34a, 34b) sont prévus le long d'un côté de l'ouverture (11).

6. Dispositif selon l'une des revendications précédentes, **caractérisé en ce que** les conducteurs de lumière (33, 34) sont disposés le long de la direction de déplacement (39) de la partie mobile (12) et/ou de manière symétrique.

7. Dispositif selon l'une des revendications précédentes, **caractérisé en ce que** les conducteurs de lumière (33, 34) sont pourvus d'une structure (40) permettant d'émettre resp. d'injecter la lumière perpendiculairement à leur direction longitudinale qui est prévue de préférence de façon à être multipliée et/ou augmentée à mesure que l'on s'éloigne de l'élément émetteur.

8. Dispositif selon la revendication 7, **caractérisé en ce que** la structure (40) est exécutée de manière à augmenter l'intensité lumineuse dans la zone dans laquelle la partie mobile (12) se trouve à la fin de son mouvement de fermeture

9. Dispositif selon l'une des revendications précédentes, **caractérisé en ce que** l'on prévoit un entraînement motorisé (20) pour le déplacement de la partie mobile (12), lequel entraînement peut être commandé suite aux signaux présents au niveau du récepteur (Ea, Eb).

10. Dispositif selon l'une des revendications précédentes, **caractérisé en ce qu'**un élément de compensation permettant une compensation de la lumière parasite par un réglage de l'intensité lumineuse injectée dans le dispositif de mesure par au moins une source lumineuse (1, 2, 3, 4) est associé au conducteur de lumière (33, 34), de manière à ce que la composante de lumière alternative synchronisée qui est produite entre des phases différentes des sources lumineuses qui émettent périodiquement de la lumière de manière rythmée et suivant une séquence temporelle, soit nulle.

11. Dispositif selon la revendication 10, **caractérisé en ce que** l'élément de compensation est la source lumineuse (1, 2, 3, 4) associée au conducteur de lumière récepteur.

12. Dispositif selon l'une des revendications précédentes, **caractérisé en ce que** la source lumineuse (1, 2, 3, 4) et le récepteur (Ea, Eb) sont reliés à un dispositif de régulation grâce auquel le signal lumineux des diodes lumineuses utilisées en tant que source lumineuse est compensé par un autre signal lumineux modulé de manière à appliquer essentiellement un signal lumineux constant aux bornes du récepteur, la valeur moyenne temporelle du courant qui est nécessaire pour produire l'autre signal lumineux modulé et/ou la valeur moyenne temporelle du courant qui est amené à l'au moins une diode lumineuse se correspondant sensiblement.

13. Dispositif selon l'une des revendications précédentes, **caractérisé en ce que** le dispositif est associé à un toit coulissant de véhicule automobile ou à un lève-vitre ou à un store ou fait partie d'un dispositif de surveillance de malle arrière.

14. Dispositif selon l'une des revendications précédentes, **caractérisé en ce que** les conducteurs de lumière (33, 34) sont, au moins en partie, transparents et **en ce que** la lumière a une longueur d'onde comprise dans un domaine visible pour l'oeil humain.

15. Procédé de reconnaissance d'un objet dans ou sur une ouverture (11), notamment d'un véhicule automobile, pouvant être fermée au moyen d'une partie mobile (12), comprenant les étapes ;

- alimentation de lumière dans un conducteur de lumière (33, 34) disposé, au moins en partie, le long de l'ouverture (11),
- détection de modifications dans la lumière reçue au moyen d'un récepteur (Ea, Eb),
**caractérisé par** les étapes
- installation d'au moins un premier conducteur de lumière (33) et d'au moins un second conducteur de lumière (34) le long de l'ouverture (11),

- émission alternée de lumière par l'au moins un premier et l'au moins un second conducteur de lumière (33, 34) perpendiculairement à leur étendue longitudinale pour former un champ lumineux bidirectionnel (F) s'étendant d'un bord à l'autre d'au moins une partie de l'ouverture (11),

- réception de la lumière au moyen d'un récepteur (Ea, Eb) en liaison fonctionnelle avec l'autre conducteur de lumière respectif et

- comparaison des signaux du champ lumineux alterné présents au niveau des récepteurs (Ea, Eb) pour la reconnaissance de l'objet (O).

16. Procédé selon la revendication 15, **caractérisé en ce que** les signaux présents au niveau des récepteurs (Ea, Eb) sont multipliées ou divisés entre eux pour détecter des modifications et sont comparés à une valeur de référence.

17. Procédé selon la revendication 16, **caractérisé en ce que** l'on mémorise, en tant que valeur de référence, une caractéristique établie sur le trajet de déplacement de la partie mobile (12), qui dépend de la position de la partie mobile.

18. Procédé selon l'une des revendications 15 à 17, **caractérisé en ce que** l'on forme, à partir des signaux présents au niveau des récepteurs (Ea, Eb), une différence pour reconnaître un objet (O) statique se trouvant dans le champ lumineux (F).

19. Procédé selon l'une des revendications 15 à 18, **caractérisé en ce que** l'intensité lumineuse de la lumière émise par le conducteur de lumière (33, 34) est augmentée dans la zone dans laquelle se trouve la partie mobile (12) à la fin de son mouvement de fermeture.

20. Procédé selon l'une des revendications 15 à 19, **caractérisé en ce que** l'ouverture (11) est fermée par la partie mobile (12) au moyen d'un entraînement motorisé (20) qui est commandé suite aux signaux présents au niveau du récepteur (Ea, Eb).

21. Procédé selon l'une des revendications 15 à 20, **caractérisé en ce que** l'objet (O) est une précipitation et **en ce que** l'ouverture est fermée en cas de reconnaissance d'une précipitation.

22. Procédé selon l'une des revendications 15 à 21, **caractérisé en ce que** l'on injecte dans les conducteurs de lumière (33, 34) au moins en partie transparents une lumière dans un domaine de longueurs d'onde visible pour l'oeil humain et, de préférence, à une fréquence non perceptible pour l'oeil humain.

23. Procédé selon l'une des revendications 15 à 22, **caractérisé en ce que** le récepteur (Ea, Eb) perçoit un fort rayonnement solaire dans la zone du champ lumineux et déclenche de ce fait une fermeture automatique de la partie mobile (12).

24. Procédé selon l'une des revendications 15 à 23, **caractérisé en ce que** la partie mobile (12) est une partie de véhicule automobile telle qu'un toit coulissant, un lève-vitre ou un capot de malle arrière.

25. Procédé selon l'une des revendications 15 à 24, **caractérisé en ce que** la lumière incidente dans le second conducteur de lumière contient une information lumineuse sur des mouvements à l'intérieur d'un véhicule automobile et/ou au niveau des vitres d'un véhicule automobile qui peuvent être analysés par une unité d'analyse.

26. Procédé selon l'une des revendications 15 à 25, **caractérisé en ce que** le signal lumineux des diodes lumineuses utilisées en tant que source lumineuse (1, 2, 3, 4) est compensé par un autre signal lumineux modulé de manière à appliquer essentiellement un signal lumineux constant aux bornes du récepteur (Ea, Eb), la valeur moyenne temporelle du courant qui est nécessaire pour produire l'autre signal lumineux modulé et/ou la valeur moyenne temporelle du courant qui est amené à l'au moins une diode lumineuse étant modifiée/s de manière à ce que les valeurs moyennes temporelles se correspondent sensiblement.

Fig. 1

Fig. 2

33     1

11

2     Ea

34

Eb     33     1

11

2

34

56       55

Fig. 3

Fig. 4

Fig. 5

**Fig. 6**

Eb    34

2

Ea                                        33

Fig. 7

Eb        34

2

1

Ea                                        33

Fig. 8

1

34a                        34b

33b                        33a

Eb

Ea

2

Fig. 9

Fig. 10

Fig. 11

Fig. 12

Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 03009476 A1
- DE 10205810 A1
- EP 0706648 B1
- DE 102004011780